# EUROPEAN PATENT SPECIFICATION

(11) **EP 1 830 181 B1**
(45) Date of publication and mention of the grant of the patent: **18.08.2010**
(21) Application number: 07103304.7
(22) Date of filing: 01.03.2007
(51) Int. Cl.: G01N 27/20, G01N 33/38

(54) **Method of monitoring the carrying capacity of reinforced concrete roof or floor**
Verfahren zur Überwachung der Tragekapazität von Stahlbetondächern oder -böden
Procédé de surveillance de la capacité de charge d'un toit ou d'un plancher en béton armé

(30) Priority: 02.03.2006 RU 2006106390
(43) Date of publication of application: 05.09.2007
(73) Proprietor: Korolev, Igor Gennadievich, 119019 Moscow (RU)
(72) Inventor: Korolev, Igor Gennadievich, 119019 Moscow (RU)
(74) Representative: Jeck, Anton

(56) References cited:
- WO-A-87/04209
- WO-A-95/33990
- DE-C1- 10 102 577
- JP-A- 8 193 993
- JP-A- 8 201 324
- JP-A- 2003 107 025
- SU-A1- 725 006
- SU-A1- 1 778 679
- US-A- 3 603 141
- SONG G ET AL: "Health monitoring and rehabilitation of a concrete structure using intelligent materials" SMART MATERIALS AND STRUCTURES, IOP PUBLISHING LTD., BRISTOL, GB, vol. 15, no. 2, 30 January 2006 (2006-01-30), pages 309-314, XP020105353 ISSN: 0964-1726

## Description

The invention relates to a method of monitoring the carrying capacity of a prestressed concrete roof or floor according to claim 1 and covers the sphere of reinforced concrete structures quality control by non-destructive methods, namely reinforced roof or floor cable system stressed deformation state measurement. The invention can be used for building and structure monitoring.

A method of underground metal structure insulating cover condition monitoring by passing of high frequency alternating current through the metallic structure - grounding anode circuit is known in the art, and during the period of use of the building dielectric dissipation is measured and the ratio of ageing of the insulating cover is calculated (Applicant's certificate of the USSR No. 725006, class G01 N 27/02, Bl No. 12, 30.03.80).

A method of nuclear power plant metal structure elements stressed state measurement by measuring its electrical resistance alteration is also known in the art (Application of the Russian Federation No. 2004112734, class G01 N 27/02, 2005.10.20).

Furthermore, a magnetostriction method of concrete structure reinforcement stress measurement is known in the art, which lies in measurement of elastic anisotropy alteration in the steel reinforcement during the process of concrete structure movement inside the ring-shaped inductive probe of stress due to driving of eddy current in the structure reinforcement inducing electromotive force (Applicant's certificate of the USSR No. 306409, class G01 N 27/02, BI No. 19 11.06.1971 (prototype)).

JP-08201324 discloses a method of monitoring the carrying capacity of prestressed concrete structures by means of an electrical measurement on the reinforcing elements.

The shortcomings of the above known methods are the impossibility to perform continuous monitoring over the reinforcement stressed state during the process of reinforced concrete structure loading due to the necessity of providing high voltage in the monitored object, high energy consumption as well as complexity and insufficient safety of the work process.

The technical problem underlying the present invention is to offer a possibility of continuously monitoring and getting on-line data of the concrete roof and floor carrying capacity according to a cable reinforcement steel bar or cable reinforcement bar stressed deformation state during the period of building use in compliance with reduction of energy consumption and safety of a working process.

This technical problem is solved by a method with the features of the independent claim. Further embodiments of the invention are subject to the dependent claims.

According to the invention, a method of monitoring over the carrying capacity of prestressed concrete roof or floor or any load bearing structure carrying capacity estimation according to cable reinforcement stressed deformation state monitoring by means of passing of electric current through the reinforcement and electrical resistance measurement which shows the stressed state of the reinforcement. According to the invention electrical resistance of every steel bar or cable reinforcement bar is preliminarily calibrated with respect to the tension stress of a bar and during the process of construction and use of a building, while the roof or floor or any load bearing structure is being loaded, electrical current is conducted through every stressed cable reinforcement bar and electrical resistance alteration of every bar is monitored which shows the stressed state of the bar and by comparing the monitored electrical resistance alteration with the ultimate stress limit of the bar the carrying capacity of the roof or floor or any load bearing structure can be estimated. Low frequency alternating or direct electrical current can be conducted through the steel bar or cable reinforcement bar.

The proposed method is different from the known methods in that the electrical resistance of every steel bar or cable reinforcement bar is preliminarily calibrated with respect to its tension stress and during the process of construction and use of a building, while a roof or floor or any load-bearing structure is being loaded, and electrical current is conducted through every stressed steel bar or cable reinforcement bar and the electrical resistance alteration of every bar is monitored which shows the stressed state of a steel bar or cable reinforcement bar, wherein the carrying capacity of the roof or floor or any load bearing structure can be estimated by comparing the electrical resistance alteration with the ultimate stress limit of the bar.

The proposed cumulative action, namely preliminary calibration of reinforcement bars and strands with conduction of electrical current, will enable even with the help of a simple monitoring computer program to provide the possibility of detection of the ultimate stress limit exceed and occurrence of roof and floor collapse emergency during construction and use of buildings and load-bearing structures.

The method of ferromagnetic (reinforcement bars and strands) magnetostriction is conditioned by complicated random dependence of elastic anisotropy alteration of the concrete structure steel reinforcement and resistance to passing electrical current R(ohm) on developing tension stresses σ(kg/cm²) inducing electromotive force in ferromagnetic. Randomness of dependence of R on σ is conditioned by random magnetic properties of rolled and stretched batches of building bars. While the reinforcement bar is being stretched within the elastic stage, the electrical resistance of the bar decreases almost proportionally to tension stress due to additional electromotive force occurrence which caused by ferromagnetic polar charged domain forced aligning along the stretching force vector. The effect is clearly shown when electrical current passes through the loaded reinforcement bar or strand.

These and other aspects of the invention will be apparent from and elucidated with reference to the embodiment(s) described hereinafter.

The invention will be described in more detail hereinafter with reference to exemplary embodiments. However, the invention is not limited to these exemplary embodiments.
- Fig.1: shows the connection diagram of preliminary stressed cable reinforcement bars of roof or floor;
- Fig.2: shows the bar calibration connection diagram; and

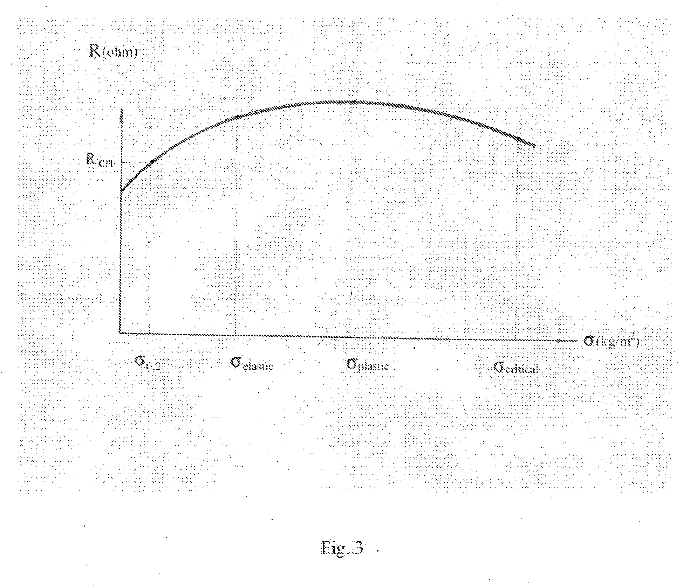

- Fig.3: shows the dependence plot of electrical resistance R(ohm) on stretched reinforcement bar tension stress σ(kg/cm²).

Preliminary stretched roof or floor cable reinforcement bars or strands 1 are connected to the electrical current power source and through the ohmmeter 2 bars are also connected to the logger 3 and alarm 4. While being calibrated cable reinforcement bar 1 is connected to the alternating current power source through current regulator 5, amplifier 6 and ohmmeter 2.

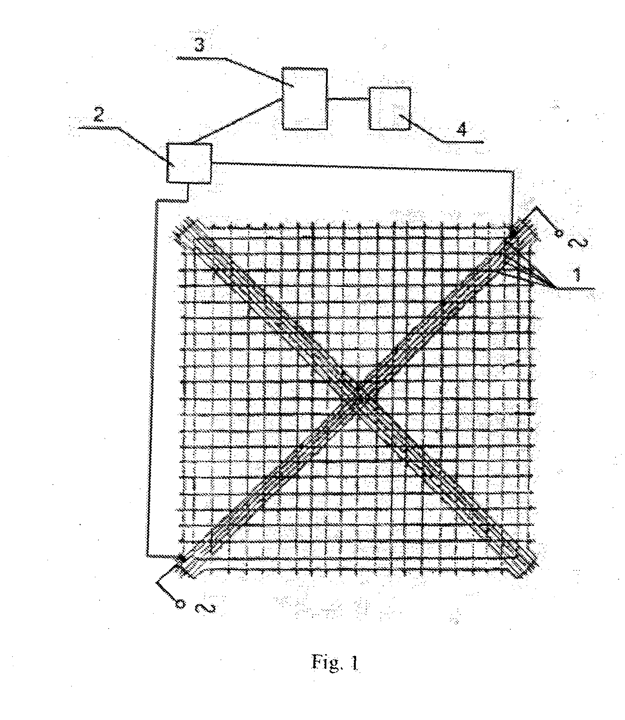

When constructing and using load-bearing constructions of large-span buildings during loading of roof slabs and intermediate floors, spatial curvilinear reinforced concrete shells and spatial curvilinear reinforced concrete shells with prestressed self-regulated system - reinforcement web, it will be enough to run faint electrical current through reinforcement bars and strands so that it is possible to monitor electrical resistance in each bar or strand with the help of a logger (computer program) (fig.1). For this purpose the electrical resistance of steel bars or cable reinforcement bars used for construction of roofs and floors is preliminarily calibrated with respect to the tension stress of a bar. Each critical value of tension stresses σ (kg/cm²) developing in bars and strands during use will be matched with a definite value R (ohm) different for every bar (strand) and defined by the logger as a signal (emergency) value.

The proposed technology according to the invention provides the possibility to control physics of building and assembling operations and use processes of constructed cast-in-place reinforced concrete large-span structures by:
1. extreme conditions of use of nuclear and thermal power stations, pools, water parks, bath rooms, where there are clear violent fluctuations of temperature and humidity and as the consequence additional thermal deformations and tensions and strong requirements for corrosion resistance of prestressed reinforcement (bars and strands) are taking place.
2. critical (strategic) conditions of use, i.e. apartment houses, public and social buildings, sports buildings structures where immediate evacuation of people is necessary in case of emergency condition of the construction structure.

### Example:

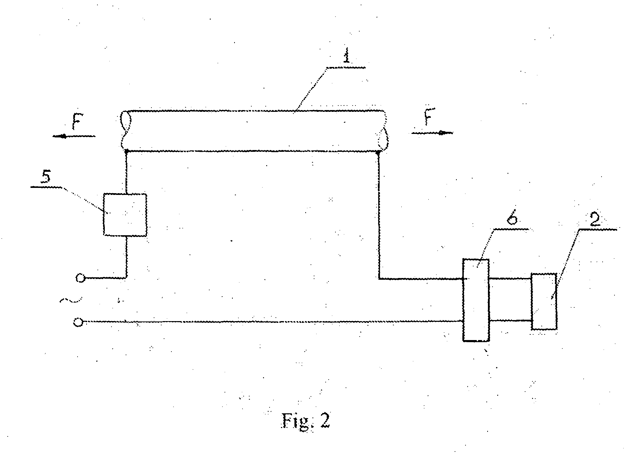

Before constructing a roof or floor with prestressed cable reinforcement 1 on diagonals, every cable reinforcement steel strand is calibrated according the scheme on fig.2. The stretching force F (kg/cm²) is applied to the strand and electrical resistance of circuit strand 1 - current regulator 5 - amplifier 6 - ohmmeter 2 is being measured. The critical value of the electric resistance R_{CRT} is being signed at a point when the tension stress is equal to the ultimate stress limit σ₀₂ according to standard GOST 10884-94 for each grade of steel. The calibration data is stored in the logger 3 memory banks as the critical values of electrical resistance R_{CRT}. During the process of use of the roof or floor, while it is being loaded, the electric current passes through every strand of cable reinforcement. At the moment when the critical resistance value R_{CRT} is achieved, the alarm 4 switches on.

The proposed method provides an electronic three-dimensional system of control over mechanical stresses of any reinforced concrete structure and continuous diagnostics of emergency conditions of load-bearing structures of constructions and buildings and its stress and strain state both in prestressed self-regulated system - reinforcement web, and in separate steel bars or cable reinforcement bars which are loaded in shape-generating layers of concrete in load-bearing reinforced concrete constructions in diagonal and orthogonal directions, for the areas with the most intense moments of bending (by bending moment curve) with the use of ferromagnetic magnetostriction effect.

The on-line data registered by the logger gives the opportunity to prevent a building or structure collapse or evacuating the inhabitants to safe areas. The invention relates particularly to a:
1. Method of monitoring carrying capacity of prestressed concrete roof or floor according to cable reinforcement stress and strain state by passing electric current through the steel bar or cable reinforcement bar and by measuring the electrical resistance the alteration of which shows the stressed state of the reinforcement, wherein the electrical resistance of every cable reinforcement bar is preliminarily calibrated with respect to the tension stress of a bar and during the process of construction and use of a building in the period of loading of roof or electrical current is conducted through every stressed cable reinforcement bar, which stressed state alteration is monitored by measuring electrical resistance of the steel bar or cable reinforcement bar and comparing to the ultimate stress limit the carrying capacity of the roof or floor can be estimated.
2. The Method as specified under point 1, which differs in that low frequency alternative electrical current is conducted though every stressed cable reinforcement bar.
3. Method as specified under point 1, which differs in that direct electrical current is conducted though every stressed cable reinforcement bar.

### Sources of information:

1. Author's certificate of the USSR No. 725006, class G01 N 27/02, Bl No. 12, 30.03.80.
2. Application of the Russian Federation No. 2004112734, class G01 N 27/02, 2005.10.20
3. Author's certificate of the USSR No. 306409, class G01 N 27/02, BI No. 19 11.06.1971 (prototype).

## Claims

1. A method of monitoring the carrying capacity of a prestressed concrete roof or floor or any load bearing structure according to cable reinforcement stress and strain state by passing electric current through a steel bar or cable reinforcement bar and by measuring the electrical resistance, the alteration of which shows the stressed state of the reinforcement, wherein
- the electrical resistance of every steel bar or cable reinforcement bar is preliminarily calibrated with respect to the tension stress of a bar and
- during the process of construction and use of a building, while the roof or floor or any load bearing structure is loaded, electrical current is conducted through every stressed steel bar or cable reinforcement bar, and
- the electrical resistance alteration of every bar is monitored by measuring the electrical resistance of a steel bar or cable reinforcement bar and
- by comparing the electrical resistance alteration with the ultimate stress limit, the carrying capacity of the roof or floor is estimated.

2. Method according to claim 1, **characterized in that** low frequency alternative electrical current is conducted though every stressed cable reinforcement bar.

3. Method according to claim 1, **characterized in that** direct electrical current is conducted though every stressed cable reinforcement bar.

## Patentansprüche

1. Verfahren zur Überwachung der Tragekapazität eines Spannbetondachs, - bodens oder einer lasttragenden Struktur gemäß einer Kabelbewehrungsbeanspruchung und eines Verformungszustands durch Leiten eines elektrischen Stroms durch eine Stahlstange oder Kabelbewehrungsstange und durch Messen des elektrischen Widerstands, dessen Änderung den Spannungszustand der Bewehrung anzeigt,
**dadurch gekennzeichnet, dass**
- der elektrische Widerstand jeder Stahlstange oder Kabelbewehrungsstange hinsichtlich der Spannungsbeanspruchung vorkalibriert ist,
- während des Konstruktionsprozesses und der Benutzung eines Gebäudes, wobei das Dach, der Boden oder eine beliebige lasttragende Struktur belastet wird, der elektrische Strom durch jede beanspruchte Stahlstange oder Kabelbewehrungsstange geleitet wird und
- durch Vergleich der Änderung des elektrischen Stroms mit der Spannungshöchstgrenze die Tragekapazität des Dachs oder Bodens beurteilt wird.

2. Verfahren nach Anspruch 1,
**dadurch gekennzeichnet,**
**dass** ein elektrischer Niederfrequenz-Wechselstrom durch jede beanspruchte Kabelbewehrungsstange geleitet wird.

3. Verfahren nach Anspruch 1,
**dadurch gekennzeichnet,**
**dass** ein elektrischer Gleichstrom durch jede beanspruchte Kabelbewehrungsstange geleitet wird.

## Revendications

1. Procédé de surveillance de la capacité de charge d'un toit ou d'un plancher en béton précontraint ou de toute structure porteuse conformément à l'état de contrainte et de déformation d'un renfort par câble par le passage d'un courant électrique à travers une barre d'acier ou une barre de renfort par câble et par le mesurage de la résistance électrique, dont l'altération présente l'état sous contrainte du renfort, où
- la résistance électrique de chaque barre d'acier ou barre de renfort par câble est étalonnée au préalable par rapport à la contrainte de tension d'une barre et
- au cours du procédé de construction et d'utilisation d'un bâtiment, alors que le toit ou le plancher ou toute structure porteuse est soumise à une charge, un courant électrique est acheminé à travers chaque barre d'acier ou barre de renfort par câble sous contrainte, et
- l'altération de la résistance électrique de chaque barre est surveillée par le mesurage de la résistance électrique d'une barre d'acier ou d'une barre de renfort par câble et
- en comparant l'altération de la résistance électrique à la limite de contrainte ultime, la capacité de charge du toit ou du plancher est estimée.

2. Procédé selon la revendication 1, **caractérisé en ce qu'**un courant électrique alternatif de basse fréquence est acheminé à travers chaque barre de renfort par câble sous contrainte.

3. Procédé selon la revendication 1, **caractérisé en ce qu'**un courant électrique continu est acheminé à travers chaque barre de renfort par câble sous contrainte.
